# EUROPEAN PATENT APPLICATION

(11) **EP 3 754 140 A1**
(43) Date of publication of application: **23.12.2020**
(21) Application number: 18904988.5
(22) Date of filing: 11.10.2018
(51) Int. Cl.: E05B 49/00

(54) **REMOTE CONTROL ELECTRONIC LOCK SYSTEM AND ENCRYPTION AND DECRYPTION METHODS THEREOF**

(30) Priority: 12.02.2018 CN 201810144070
(71) Applicant: Team Young Technology Co., Ltd., 32070 Taoyuan City (TW)
(72) Inventor: SHIH, Wen-Chan, Taiwan 32070 (CN); LAI, Chien-Chou, Taiwan32070 (CN); KUO, I-Tung, Taiwan 32070 (CN); WANG, Dy-Cheng, Taiwan 32070 (CN)
(74) Representative: Becker, Eberhard
(86) International application number: PCT/CN2018/109792
(87) International publication number: WO 2019/153778

(57) **Abstract**

An electronic lock system having an electronic lock is provided, and the electronic lock includes a wireless receiving unit for receiving an unlocking signal wirelessly; a storage unit for storing an unlocking identifier; a processing unit including a verification module, a timing module, and an actuating signal generating module; an unlocking actuator; and a setting input port. An encryption and decryption method suitable for a user to perform setting is also provided. Through the electronic lock system and the encryption and decryption method of the invention, a hidden multi-function remote control electronic lock adapted for users to build unlocking codes is obtained, so as to provide a safe electronic lock suitable for multiple uses and applications, and set different levels of security without being limited by the manufacturer, and resetting may be performed in case of controller lost, so as to avoid problems of password leakage and intrusion.

## Description

### Technical Field

The invention relates to an electronic lock system, and particularly relates to a remote control electronic lock system with high security and suitable for users to build their own systems, and an encryption and decryption method thereof.

### Description of Related Art

Along with development of science and technology, electronic locks have become more and more popular. For security's sake, password unlocking methods of the electronic locks are also more diversified and complicated.

Commonly used electronic locks on the market include electronic locks similar to a touch-tone telephone, by entering a set of password in sequence through keys, if the input password is the same as an internal default password, a mechanical switch is controlled to complete unlocking. There are also inductive electronic locks, but a user needs to carry an additional magnetic card when going out, and the magnetic card is easy to be copied. In addition, taking a safe box as an example, although a password thereof may be set by the user, an input device is exposed, and a thief is easy to destroy the lock from the outside, and since the password is set by people, it is easy to be cracked. Taking a proximity inductive electronic door lock as an example, a sensor must be exposed outside the door, which is also easily destroyed by a thief from the outside, and a proximity card is easily copied.

Further, a current electronic door lock may be generally set with a password, and the password is stored in a non-volatile storage device in a lock body, and is referred to as a fixed password hereinafter. The password is input each time when unlocking is performed, and the input password is compared with the password stored in the non-volatile storage device, and the electronic door lock is unlocked when two of the passwords are the same. However, regarding such a method, it is easy to see the password from an input interface, and it is inconvenient for a temporary user. When the user is not beside the door lock, if the temporary user needs to unlock the door lock, the user needs to inform the temporary user with the fixed password. After the temporary user finishes using the password, the user usually needs to change the password in time, otherwise it is easy to cause password leakage, so that an application scope of the above method is not large.

In order to resolve the above problem, one of the existing technologies is to authorize the temporary user through a mobile APP. A defect of this method is that it requires the door lock to have a complete authorization solution, at present, a practice of most products is to network the door lock and control the door lock through the network, which increases cost on one hand and brings security risks on the other. On the other hand, the temporary user also needs to use a mobile phone installed with the APP, and the mobile phone also needs to connect the network to receive authorization information, and for users who cannot install the APP or have not installed the corresponding APP, and users who have a poor network environment, this method doesn't work.

Another method is a dynamic password lock system proposed by patent No. CN102168509 B, where the password is changed along with date or time, but when the password is changed and generated along with the date or time, a password lock manager enters a fixed password F and a date D to calculate the password, which means that the password is related to the date, the password may be used at any time within a day on the same date, and the passwords of different dates are dynamically changed. The user cannot set a time period or a number of times of use, and different passwords are required for unlocking on different dates, which is very inconvenient to use.

### SUMMARY

In view of the aforementioned conventional technologies and problems, the invention is directed to a hidden multi-function remote control electronic lock suitable for a user to build an unlocking code. on his own. Particularly, a first objective is to provide a self-built remote control electronic lock system that a user is adapted to generate a password in a random manner to set the password of the electronic lock without memorizing the password, and adapted to change an original set password when needed.

A further objective of the present invention is directed to an electronic lock with high security, in which there are multiple sets of unlocking codes needed to be verified within a specific time length, and a quantity of sets of the unlocking codes and setting of an identification time are adapted to be changed to provide multiple levels of security settings for multi-function applications.

Another further objective of the present invention is directed to an electronic lock system adapted to authorize unlocking separately, which allows multiple second-ranking personnel to arrive at the scene to perform unlocking at the same time, and directed to an electronic lock system adapted to record unlockers.

Another further objective of the present invention is directed to a novel power shortage warning device, where an electronic lock not only capable of retaining the minimum power to provide an unlocking function, but also reminding a user to replace battery power.

Another further objective of the present invention is directed to an electronic lock system, which is adapted to prevent thieves from recording and simultaneously provide multiple unlocking controllers to perform unlocking, and provide a method for encrypting and decrypting unlocking codes.

In order to achieve the above objectives, the invention provides an electronic lock system including an electronic lock, and the electronic lock includes:
a setting input port, configured to allow a user to variably set at least two sets of unlocking identifiers, and at least one of at least two sets of the unlocking identifiers is a random number automatically generated by a computer used by the user;
a storage unit, storing at least two sets of the unlocking identifiers;
a wireless receiving unit, configured to receive an unlocking signal wirelessly;
a processing unit, connecting the wireless receiving unit and the storage unit, and including:
   a verification module, configured to identify the unlocking signal, and capable of verifying whether the unlocking signal matches with at least two sets of the unlocking identifiers; and
   an actuating signal generating module, configured to send an actuating signal in case that the unlocking signal matches with at least two sets of the unlocking identifiers;
an unlocking actuator, configured to perform unlocking when receiving the actuating signal.

Through the above technique, the user is adapted to build his own password, reprogram the unlocking identifier of the electronic lock by himself when an unlocking controller is lost, and complete setting of a new unlocking identifier of the electronic lock and the unlocking controller through the setting input port instead of replacing a whole set of the electronic lock, and it is only required to add the unlocking controller, and is unnecessary to worry about the missing unlocking controller to be picked up by others to perform unlocking.

Further, in order to achieve the above objectives, the electronic lock further includes a timing module configured to start timing after receiving the unlocking signal, and the actuating signal generating module sending the actuating signal only when at least two sets of the unlocking identifiers is verified within a specific time length. In this way, thieves are prevented from using a frequency sweeping method to decode an unlocking code.

Further, in order to achieve the above objectives, the processing unit of the electronic lock system of the invention further includes a security level setting module configured to change a length of the specific time length or a quantity of sets of the unlocking identifiers required to be verified by the verification module. In this way, each user may change a security level by changing the quantity of sets of the unlocking identifiers or a receiving time limit according to an actual requirement, and combined with reprogramming the identifiers in a random manner, it is able to provide a multi-function electronic lock meeting user's various actual installation or security needs.

Further, in order to achieve the above objectives, the invention provides an electronic lock system, where one set of the unlocking identifier is a specific unlocking controller identifier configured to identify at least one unlocking controller. In this way, besides security is enhanced, specific unlocking users are also recorded.

Further, in order to achieve the above objectives, the invention provides an electronic lock system, where one of at least two sets of the unlocking identifiers is a power replacement confirmation code, and the electronic lock further includes a power warning module, configured to enter a sleep mode to stop receiving the unlocking signal when a specific value of power is left, and after entering the sleep mode, the sleeping is aborted only when the power replacement confirmation code is received.

Further, in order to achieve the above objectives, the invention provides an electronic lock system, where the storage unit stores a keystore, and the keystore includes at least one key; the unlocking signal received by the wireless receiving unit includes an encrypted unlocking code obtained by encrypting a set of unlocking codes by using at least one of a base number and the key; and the processing unit further includes a decryption module configured to decrypt at least one of the base number and set of the unlocking codes from the received encrypted unlocking code by using the key for comparing with one of at least two sets of the unlocking identifiers.

Further, in order to achieve the above objectives, the invention provides an electronic lock system, where the processing unit further includes a base number comparison module, and the base number is a counting number, each time when the base number is decrypted, the base number is stored, and the base number is compared with a previously stored base number, and decryption is achieved when a difference thereof is within a range of a specific value. The electronic lock may also store a counting library recording a plurality of counting numbers individually corresponding to a plurality of unlocking controllers. The unlocking signal received by the wireless receiving unit includes a controller identifier corresponding to the individual unlocking controller, and the base number comparison module compares the decrypted base number with the existing counting number corresponding to the received controller identifier. Further, a starting value of the counting number is a random number set randomly. Thereby, the encrypted unlocking code is prevented from being recorded, and different unlocking controllers may be identified.

Further, in order to achieve the above objectives, the electronic lock system of the invention further includes an unlocking controller, which has a storage unit configured to store at least one of at least two sets of the unlocking identifiers; and a transmission control unit, configured to transmit an unlocking signal containing at least one of at least two sets of the unlocking identifiers to the electronic lock within the specific time length. In this way, one person may use multiple sets of unlocking codes to perform unlocking independently, or two unlocking codes may be respectively authorized to two unlocking controllers for transmission, and unlocking is achieved only when two of the unlocking controllers operate simultaneously.

Further, the unlocking controller has a power replacement confirmation module configured to send a power replacement confirmation code when activated. In this way, if the user still insists on not replacing a battery when the power is low, this complicated operation is required every time during unlocking until the power is completely off.

Further, in order to achieve the above objectives, the invention further provides an encryption and decryption method for a password, where the password is stored in a storage unit, and the storage unit further stores a keystore, and the keystore contains at least one key. The method includes following steps. A dynamic base number is obtained in response to each encryption request. At least one of the key is taken out to encrypt the base number to generate an encrypted base number for transmission. A dynamic key is generated according to at least one of the key and the base number, and the password is encrypted by using the dynamic key to generate an encrypted password for transmission. The decryption method for password is applied to a device, and the device has the storage unit for storing the keystore, and the keystore includes at least one key; the method includes following steps. An encrypted dynamic base number code formed by encrypting a dynamic base number and an encrypted password formed by encrypting a password are received. At least one of the key is taken out to decrypt the encrypted dynamic base number code to obtain the base number. At least one of the base number and at least one of the key is used to decrypt the dynamic key. And, the dynamic key is used to decrypt the encrypted password to obtain the password.

According to the above description, based on the above various aspects of the invention, since a lock and an antenna may all be installed inside a door, even inside a door panel, and an external effective unlocking distance is more than 10 m and an internal effective unlocking distance is more than 50 m, an electronic lock system capable of preventing the installing position of the lock or the parts thereof from being seen outside the door to avoid being damaged and achieving the above-mentioned various objectives is provided. Particularly, the user may set his own unlocking code with extremely high security, and set different levels of security without being specified by a product manufacturer before it leaves the factory, so that a problem of password data leakage, and a problem of having to remember the unlocking code to cause password disremember or leakage are avoided. Moreover, the electronic lock disclosed by the invention may be remotely unlocked without using a wireless network, so that a security problem related to network hackers is avoided. In addition, one of the multiple sets of identifiers may be set as a controller code, which may store opening records of different personnel, and may be used for substitution authorization unlocking management. Therefore, the electronic lock disclosed by the invention may provide a hidden multi-function electronic lock adapted for the user to independently build unlocking codes, and provide a safe electronic lock suitable for multiple purposes and applications in a simple structure.

### BRIEF DESCRIPTION OF THE DRAWINGS

FIG. 1 is a schematic diagram of components of an electronic lock according to a first embodiment of the invention.
FIG. 2 is a schematic diagram of components of an unlocking controller according to the first embodiment of the invention.
FIG. 3 is a schematic diagram of components of an electronic lock according to a second embodiment of the invention.
FIG. 4 is a flowchart illustrating an encryption method according to the second embodiment of the invention.
FIG. 5 is a schematic diagram of components of an unlocking controller according to the second embodiment of the invention.
FIG. 6 is a flowchart illustrating a decryption method according to the second embodiment of the invention.

### DESCRIPTION OF THE EMBODIMENTS

Components and functions of an electronic lock system disclosed in the invention are clearly and completely described below in following corresponding preferred embodiments with reference of accompanying drawings. However, the provided embodiments are a part of embodiments of the invention, not all of the embodiments. Each component in the drawings is only used to explain the technical features of the invention, and is not intended to be limiting of the invention.

An electronic lock system of a first embodiment of the invention includes an electronic lock 100 and an unlocking controller 200, and since the electronic lock itself may also be a system, the electronic lock system referred to herein may also include only the electronic lock 100.

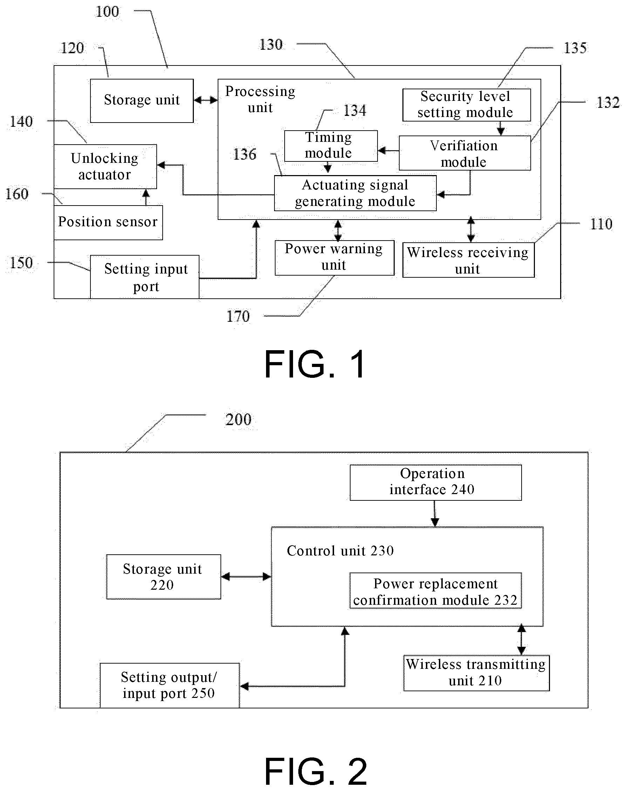

As shown in FIG. 1, the electronic lock 100 disclosed in the embodiment mainly includes a wireless receiving unit 110, a storage unit 120, a processing unit 130, an unlocking actuator 140, and a setting input port 150. In a preferred embodiment, the electronic lock 00 further includes a position sensor 160, and a power warning unit 170. The wireless receiving unit 110 is configured to wirelessly receive an unlocking signal, the storage unit 120 is configured to store at least two sets of unlocking identifiers, and a power source of the components may be a battery that is not shown, or an in home power line. The so-called unlocking signal may be a wireless signal including various unlocking codes UC, for example, a signal type code, a controlling code, or an identity identifier IP, et cetera. , which may be in the form of a fixed code, a rolling code, or an encrypted code, et cetera. The unlocking identifiers IP may be electronic lock identifiers RXID, unlocking controller identifiers TXID, or group codes GID, et cetera.

The processing unit 130 mainly includes: an verification module 132, configured to verify whether the received unlocking signal matches with at least two sets of the unlocking identifiers IP; a timing module 134, configured for timing a time of verifying the received unlocking signal; and an actuating signal generating module 136, which is configured to send an actuating signal to the unlocking actuator 140 to perform unlocking when the unlocking signal is verified to match with at least two sets of the unlocking identifiers IP within a specific time length. In a preferred embodiment, the processing unit 130 further includes a security level setting module 135, configured to change a length of the specific time length or a quantity of sets of the unlocking identifiers to be recognized by the verification module 132, so that a user may build a password according to a desired security level.

The unlocking actuator 140 is configured to retract a lock tongue or release the lock for unlocking when receiving the actuating signal. Certainly, it may also be designed to perform a locking operation when receiving the actuating signal, which depends on whether a controlling code contained in the received unlocking signal is a locking or unlocking command. Therefore, the so-called unlock or unlocking is only a representative term, which may actually include locking/unlocking, or various opening actions, et cetera. The setting input port 150 is configured to allow a user to input at least two sets of the unlocking identifiers IP, and the at least two sets of the unlocking identifiers IP are generated by the user in a random manner and may be changed by the user, which may be inputted in a wired or wireless manner. The position sensor 160 is configured to detect that the electronic lock has returned to a door closing position or the lock tongue has returned to a tongue hole position, so that the lock tongue is automatically extended to lock.

The power warning unit 170 is configured to enter a sleep mode to stop receiving the unlocking signal when a specific value of power is left, and after entering the sleep mode, the sleeping is aborted to receive the unlocking signal only when a power replacement confirmation code PC sent from the unlocking controller 200 is received.

As shown in FIG. 2, the unlocking controller 200 disclosed in the present embodiment mainly includes a wireless transmitting unit 210, a storage unit 220, a control unit 230, an operation interface 240, and a setting output/input port 250, which the control unit 230 includes a power replacement confirmation module 232. Power of these components comes from a battery that is not shown.

Wherein, the storage unit 220 is configured to store at least one of at least two sets of the unlocking identifiers IP corresponding to the electronic lock 100. The control unit 230 and the wireless transmitting unit 210 are collectively referred to as a transmission control unit, which is configured to transmit a set of unlocking codes UC containing at least one of at least two sets of the unlocking identifiers IP to the electronic lock 100 within the specified time length. The operation interface 240 is configured to allow the user to input an unlocking action. The setting output/input port 250 is configured to allow the user to input or output various sets of unlocking codes UC, and store the various unlocking codes UC into the storage unit 220. The power replacement confirmation module 232 is configured as an additional control mechanism when the power of the electronic lock 100 is insufficient, which provides the user with an additional set of procedure and reminder, and sends a power replacement confirmation code PC to temporarily abort the sleep state of the electronic lock 100, which is described in detail later.

Details of the electronic lock 100 disclosed in the embodiment are further described below. An unlocking operation is described first. The verification module 132 is configured to be capable of processing at least 5 sets of unlocking codes UC, and the verification module 132 is capable of determining a set of unlocking codes UC continuously in time divisions or at the same time, and control the quantity of sets of the unlocking codes required to be determined according to a setting of the security level setting module 138. Each set of the unlocking codes UC may include an electronic lock identifier RXID or an unlocking controller identifier TXID, and controlling codes corresponding to various actions et cetera. When the electronic lock 100 receives a radio frequency (RF) unlocking signal from the unlocking controller 200 via the wireless receiving unit 110, the verification module 132 performs verification thereto. At this time, the verification module 132 may send a timing signal to the timing module 134 to start timing when the unlocking signal is received, or may send the timing signal to the timing module 134 to start timing after verifying a first set of unlocking identifiers, and the timing module 134 sends a time-out signal after a setting time after the timing starts. After the verification module 132 verifies predetermined quantity sets of the correct unlocking identifiers, , the verification module 132 transmits an verification pass signal to the actuating signal generating module 136. At this moment, the actuating signal generating module 136 also refers to the time-out signal from the timing module 134, where if the actuating signal generating module 136 has received the time-out signal when receiving the verification pass signal, the actuating signal generating module 136 does not send the actuating signal; and if the actuating signal generating module 136 has not received the time-out signal, the actuating signal generating module 136 sends the actuating signal to the unlocking actuator 140 to perform unlocking.

Then, setting of the security level is explained. In the above situation, the user may set different levels of security manually by setting desired quantity of sets of the unlocking identifiers and a verification time limit of verifying the said sets of the unlocking identifiers. The above setting must also match a setting of the unlocking identifiers IP, i.e. , when the user initially sets the unlocking identifiers IP, the user must decide how many sets of unlocking codes UC are to be used for unlocking, and learns a time required by the verification module 132 to verify the unlocking codes UC, so as to set the security level setting module 135. Through the design of completing verification within a specific period of time, cracking of the unlocking codes UC by a thief through code scanning is prevented, since code scanning requires a longer period of time. Through the changeable setting of the security level, a coding rule of the electronic lock 100 become more diversified, and applicable functions thereof are diversified, and it is more difficult for a thief to guess the password.

For example, according to the order of security, may be divided into following levels, and the user may set a medium/high security lock according to an actual application requirement. For example, a low security level: to use one set of unlocking codes; a medium security level: to use two sets of unlocking codes; a high security level: it is required to simultaneously (within 1 second) receive two sets of unlocking codes or verify two sets of the unlocking identifiers to implement unlocking; and an ultra high security level (a treasury level): it is required to simultaneously (within 1 second) receive three sets of unlocking codes or identify two sets of the unlocking identifiers to implement unlocking.

Regarding the setting of the unlocking identifier, especially setting of the electronic lock identifier RXID or the group code GID, in a preferred embodiment, the user uses a computer and a code setting application installed therein to control the computer to set the unlocking identifier IP in a random encoding way. Then, by using the setting input port 150, the unlocking identifier IP is stored in the storage unit 120 of the electronic lock 100. Meanwhile, the unlocking identifier IP is also stored in the storage unit 220 of the unlocking controller 200 through the setting output/input port 250 of the unlocking controller 200. Wherein, in a modified embodiment, the setting of the unlocking identifier IP may also be performed by the user by using an unlocking controller loaded with an unlocking identifier setting module (not shown), and then the user controls to output the unlocking identifier IP from the unlocking controller to the electronic lock 100 through the setting output/input port 250 and the setting input port 150. In this way, by setting a randomly encoded random number as 16 bits, up to more than 65,000 sets of the unlocking identifiers may be generated, and when higher security is needed, the unlocking identifier may further be set as 64 bits. Wherein, both of the electronic lock 100 and the unlocking controller 200 are inputted with the same paired unlocking identifiers IP, and the user does not need to remember the unlocking code, so that a problem of forgetting the password or a problem that the password is stolen due to recording of the password at somewhere are avoided. One set of unlocking codes is quite complicated, and when two or more sets of unlocking codes are used, and needed to be decrypted within a specific time length, they are even more difficult to be stolen.

Moreover, since the unlocking identifier IP is set by the user, the electronic lock 100 and the unlocking controller 200 are not limited to the code that predetermined by manufacturer of the electronic lock. When the unlocking controller 200 is accidentally lost, the user only needs to purchase another unlocking controller 200 to perform resetting and rewrite a new unlocking identifier IP into the electronic lock and the unlocking controller instead of replacing the entire electronic lock system. Moreover, since there is no button on the electronic lock, and it is not to use buttons on the electronic lock to set a password and perform unlocking like a conventional electronic lock, there will be no button-pressing mark left, and a position of the electronic lock is completely invisible outside the door, so that it cannot be easily damaged.

Further, in the embodiment, two sets of unlocking codes are used for unlocking. In a modified embodiment, one of two sets of the unlocking codes may includes an identifier of the unlocking controller 200 itself to serve as an identity. Namely, when the unlocking controller 200 is used to unlock two or more electronic locks 100, or when two or more unlocking controllers 200 are used to unlock one electronic lock 100, one of two sets of the unlocking codes to be received by the electronic lock 100 may be set to include an identifier TXID of the unlocking controller 200, and the unlocking controller identifier TXID of this moment may be a serial number and/or a name specified by the user, or may be generated by a computer in a random manner and recorded and applied in pairing of multiple electronic locks 100. In this way, according to a choice, another set of corresponding identifiers of an individual electronic lock or a shared electronic lock may be transmitted together to open the authorized electronic lock. Therefore, by setting one set of the unlocking identifiers IP to be verified by the electronic lock 100 as the unlocking controller identifier TXID, besides that one unlocking controller 200 may be used to unlock multiple electronic locks, or multiple unlocking controllers 200 are used to unlock one electronic lock, or multiple unlocking controllers 200 are used to unlock multiple electronic locks, the electronic lock 100 may also be used to record each unlocking controller 200 that has been used for unlocking, and retain related data for, for example, ten times or more than a thousand times for further management and supervision.

Further, in another modified embodiment, three or more sets of the unlocking identifiers IP may be set, and two of the three sets of the unlocking identifiers IP are related to two unlocking controller identifiers TXID. In this way, it may be set as a requirement that two users who keep different unlocking controllers 200 need to be present at the same time for unlocking. Namely, each unlocking controller 200 includes an individual unlocking controller identifier TXID, and another set of common electronic lock identifier RXID. Similarly, in another modified embodiment, it is also practical to store only two sets of the unlocking identifiers IP in the electronic lock 100 and set two sets of the unlocking identifiers IP to be the unlocking controller identifiers TXID of two unlocking controllers 200. Namely, each unlocking controller 200 is used to transmit one of two sets of the identifiers IP, so that the electronic lock 100 may be unlocked only when two of the unlocking controllers 200 are simultaneously used to perform unlocking.

Therefore, in another modified embodiment, the electronic lock 100 may also be set to require four sets of the unlocking identifiers IP for unlocking, where two of the four sets are related to two unlocking controller identifiers TXID, and the other two sets are related to electronic lock identifiers RXID, which are respectively sent by two unlocking controllers 200. In this way, when different people keep different unlocking controllers 200, a more strict unlocking mechanism is provided. Further, in contrast to the unlocking situation described above, when one of the sets of the unlocking identifiers IP is set as the unlocking controller identifier TXID, by identifying the unlocking controller identifier TXID, a certain unlocking controller 200, such as a lost or stolen unlocking controller 200 may be prohibited to perform the unlocking operation, i. e. , the unlocking controller that cannot be used to perform unlocking is set.

Therefore, in view of the various application examples, in the invention, by setting the electronic lock 100 in the disclosed electronic lock system to be able to verify at least two sets of unlocking identifiers, and setting the unlocking controller 200 to be able to transmit at least one of at least two sets of the unlocking identifiers, different applications and functions may be achieved.

Operation details of the power warning unit 170 are further described below. In present embodiment, when a battery is used as a power source of the electronic lock 100, the power warning unit 170 monitors a battery power, and when the remained power reaches 15%, the power warning unit 170 turns on an LED lamp (not shown) to emit red light firstly, and/or controls a beeper (not shown) to beep every 1 hour. When the remained power reaches 5%, the power warning unit 170 makes the electronic lock 100 to stop receiving the unlocking signal, and the unlocking action enters a sleep state. At this moment, even if the unlocking controller 200 sends the correct unlocking signal, the electronic lock 100 will remind not be unlocked. The user must first, for example, click "battery replaced" in an "insufficient power" option in setting options of the unlocking controller 200 through the power replacement confirmation module 232 of the unlocking controller 200, and the unlocking controller 200 sends a power replacement confirmation code PC. Then, the electronic lock 100 receives the power replacement confirmation code PC to temporarily abort the sleep state, and receives the unlocking code UC to perform the normal verification procedure on the unlocking signal. Thereafter, if the user still does not replace the battery after the unlocking, the electronic lock 100 continues to enter the sleep state, such that when the unlocking controller 200 is used to perform unlocking again, the complicated clicking operation is still required to facilitate reminding the user to replace the battery until the battery is truly exhausted.

In overview, according to the electronic lock disclosed by the invention, a hidden multi-function electronic lock adapted for a user to independently build an unlocking code is provided, and a safe electronic lock suitable for multiple purposes and applications is provided in a simple structure.

Further, in the embodiment, the unlocking controller 200 transmits the unlocking code UC in an RF manner without relying on the Internet, so that maintenance cost may be reduced, and network hacker may therefore be avoided. The transmission method may be a fixing code method well-known in the industry that directly transmits each bit of the unlocking code in sequence, a code rolling method performed on the unlocking code, or an encryption transmission method, and then a verification module of the electronic lock 100 performs decoding, decryption and verification. Regarding the encryption transmission method, a secure encryption transmission and decoding method is described below in a second embodiment with reference to the first embodiment. According to the electronic lock system disclosed in the second embodiment, most of components of the electronic lock and the unlocking controller are the same as those of the first embodiment, so that the same components and referential numbers are used for description, and descriptions of the same components are omitted.

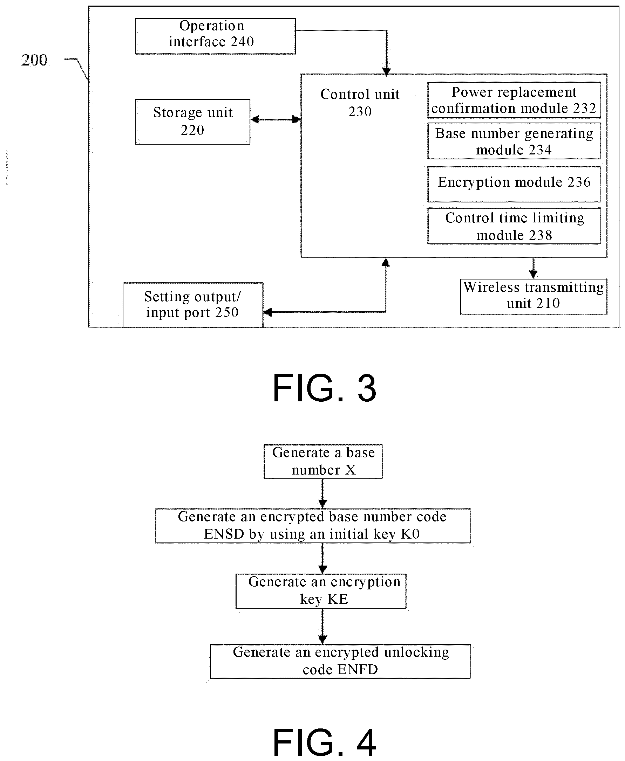

As shown in Fig. 3, in the embodiment, the control unit 230 of the unlocking controller 200 further includes a base number generating module 234, an encryption module 236, and a control time limiting module 238, . In addition to store the set electronic lock identifier RXID as the unlocking identifier IP, the storage unit 220 also stores a keystore, which contains at least one password key, and each of the said keys may be, for example, a 64-bit key, which may be randomly generated by a random number generating device (not shown), and a quantity of the keys may be determined according to an actual application requirement of the entire system, which may be up to 100, for example. In the present embodiment, each key is set in the unlocking controller 200 before the product leaves the factory, but in a modified embodiment, the keys may also be generated by the user in a manner of random number by using a computer program, and then the user inputs each of the set keys into the unlocking controller 200. In a further modified embodiment, the storage unit 220 also stores an unlocking controller identifier TXID representing the unlocking controller itself, for identifying the unlocking controller 200 that is used for unlocking.

The base number generating module 234 is used to generate a dynamic base number or referred to as a secret base number, which may be a random number or a counting number used for counting, and in case of the counting number, its initial value may also be a random number that is set randomly. When the base number generating module 234 is implemented by a counter, each time when the unlocking controller 200 sends the unlocking code UC containing the base number and the unlocking identifier IP, the counting number is accumulated by a specific value such as 1, and is stored for subsequent sending. The encryption module 236 includes a first encryption sub-module, a second encryption sub-module, and a decision sub-module (not shown), which is configured to encrypt at least the unlocking identifier IP. The control time limiting module 238 is configured to limit a time which the unlocking controller 200 may perform unlocking control.

FIG. 4 illustrates an encryption method of the unlocking controller 200 for transmitting the unlocking code UC described below. First, the base number generating module 234 generates a base number X. Then, the control unit 230 is determined to obtain a first key in the keystore of the storage unit as an initial key K0, for example, the first key among 100 keys, and then uses the key K0 and the base number X to generate a set of encrypted base number code ENSD through the first encryption sub-module (not shown) in the encryption module 236. Then, the decision sub-module (not shown) in the encryption module 236 determines a second key to be selected in the keystore of the storage unit 220, such as a 33rd key to serve as a dynamic encryption key KE according to the encrypted base number code ENSD, where the first encryption sub-module and the decision sub-module may be either hardware structures or software program expressions.

In a modified embodiment, the second key or the dynamic encryption key to be determined by the decision sub-module may also be generated through a program based on the base number X and the initial key K0, or based on the base number X alone instead of based on the encrypted base number code ENSD. In general, the second key may be generated directly or indirectly according to the base number X.

In another modified embodiment, less than 100 keys are stored in the keystore, and a decision module is not used to determine which key is selected as the second key or the dynamic encryption key KE from the keystore, but directly generates the second key or the dynamic encryption key KE according to the base number X and the initial key K0, or according to the base number X alone. In this way, it is unnecessary to store a large number of keys in the unlocking controller 200.

In still another modified embodiment, the dynamic encryption key KE may also be a random number generated randomly, and does not have to be generated by a program according to the base number X. During encryption, the base number X and the dynamic encryption key KE may be distinguished by bit positions thereof, and the initial key K0 and an encryption program may be used together to encrypt for the encrypted base number code ENSD. During decryption, the base number X is extracted according to the bit position distinguishment, and then the dynamic encryption key KE is extracted from the rest part.

In still another modified embodiment, before the dynamic encryption key KE is determined, at least one intermediate key may be generated by using the initial key K0 and the base number X, and then the dynamic encryption key KE is generated by using at least one of the intermediate key, i. e. , multi-level intermediate keys are generated to increase the complexity of encryption. In detail, for example, after the second key is generated according to the initial key K0 and the base number X, a third key is generated according to the second key and the base number X; then, a fourth key is generated to serve as the dynamic encryption key KE through the decision module according to the third key and the base number X; and the rest may be deduced by analogy, where the second key and the third key are intermediate keys.

It may be known from the above various modified embodiments that the method of generating the dynamic encryption key KE may have multiple variants. The encrypted base number code ENSD may be generated by encrypting only the base number X, or the dynamic encryption key KE can be encrypted with the base number X simultaneously, as long as there is a corresponding design between the electronic lock 100 and the unlocking controller 200.

Then, after the dynamic encryption key KE is generated, the second encryption sub-module (not shown) in the encryption module 236 is used to generate a set of encrypted unlocking codes ENFD according to the dynamic encryption key KE and the set unlocking identifier IP stored in the storage unit 220. Thereafter, the control unit 230 may send the aforementioned encrypted base number code ENSD and the encrypted unlocking code ENFD to the wireless transmitting unit 210 to transmit an unlocking signal to the electronic lock, where the second encryption sub-module may be a hardware structure or a software program expression.

In a further modified embodiment, as described above, the storage unit 220 also stores the unlocking controller identifier TXID representing the unlocking controller itself, and this code may be an key level like identifier or just a serial number, which may be defined by the user, or may be key that is predetermined before it leaves the factory and the keys can be given a serial number for optional use. While the encrypted base number code ENSD and the encrypted unlocking code ENFD are sent, the controller identifier TXID may also be sent after being encrypted or not encrypted for unlocking verification of various applications. In the present modified embodiment, an encrypted controller identifier ENTX is generated by the encryption module 236 according to the controller identifier TXID and the initial key K0 in the keystore. In another modified embodiment, when the controller identifier TXID itself is also a key, the encrypted controller identifier ENTX may also be generated by the encryption module 236 according to the controller identifier TXID and the base number X. Further, in another modified embodiment, the controller identifier may also be directly sent with the encrypted base number code ENSD and the encrypted unlocking code ENFD without being encrypted.

Further, in a modified embodiment, by storing a plurality of unlocking controller identifiers in the unlocking controllers, the unlocking controllers 200 may be differentiate into sub- unlocking controllers. and major unlocking controllers. When the electronic lock 100 is to be remotely controlled by a newly-added sub-unlocking controller 200, or when the unlocking controller 200 is lost and a new sub-unlocking controller 200 is to be added, the newly-added sub-unlocking controller 200 may only obtain at least one of the plurality of unlocking controller identifiers from the major unlocking controller, and only unlocking controller identifier obtained from the major unlocking controller can be used, and may not assign the same unlocking controller identifier to other sub-unlocking controllers for usage. Once identifiers in the major unlocking controller is assigned and used, the identifiers cannot be repeatedly assigned and used again, and an advantage thereof is that a quantity of the unlocking controllers relative to the electronic lock can be controlled. The quantity and the identifiers are all stored in the major unlocking controller, and the major unlocking controller may assign one of the set identifiers to the sub-unlocking controller, but the sub-unlocking controller cannot copy the identifier to other sub-unlock controllers. In this way, it is convenient in control of password setting, verification setting of the electronic lock, administration of the unlocking controller, et cetera.

Further, in a modified embodiment, the sub-unlocking controller is set to have as many unlocking controller identifiers TXID as the major unlocking controller, but the unlocking controller identifiers TXID are restricted from being copied to other sub-unlocking controllers. In this embodiment, the unlocking controller identifiers TXID may be just a serial number or different keys, which may be created by the user or set before the product leaves the factory.

Further, when the major unlocking controller authorizes a control right to the sub-unlocking controllers, each of the sub-unlocking controllers may be set with a time period which it is authorized to perform unlocking by the control time limiting module 238 at the same time. In an example of limiting an authorized time, predetermined sets of controller identifiers in the major unlocking controller may be repeatedly assigned to the sub-unlocking controllers for usage as long as a use time is staggered. In this way, the application may be extended, for example, only the users holding the sub-unlocking controllers may perform unlocking during a certain period of time.

Further, when more than one keystore is stored in the unlocking controller, and each of the unlocking controllers is assigned with multiple serial numbers to serve as the unlocking controller identifiers TXID for selection or limited assignment, its encryption method may be further advanced and evolved as follows. In the present modified embodiment, each key in the keystore may be set before the product leaves the factory, or set by the user, or automatically generated by using a random number. Take 20 keys as an example, the unlocking controller identifiers TXID are coded as serial numbers TX1-TX20, and there are a shared initial key K0 and dynamic encryption keys K1-K20 for being assigned to different sub-unlocking controllers, or different electronic locks for usage. Each unlocking controller identifier TXID is set to correspond to one of the keys in the keystore. It is conceivable that in a modified embodiment, the keystore corresponding to each of the unlocking controller identifiers may also be a separate keystore, which is different from the keystore used for encryption.

As shown in FIG. 4, in this embodiment, before the encryption is started, when the user initially sets the unlocking controllers, the user need to first specify which serial number is used as the unlocking controller identifier TXID, for example, the second serial number TX2. When a signal is to be transmitted to start encryption, the selected serial number TX2 is first encrypted to generate the ENTX by using the initial key K0. Then, the base number X is encrypted to generate the aforementioned encrypted base number code ENSD by using a key corresponding to the selected serial number, for example, K2 as a new initial key NK0. Regarding the subsequent encryption, the encryption may be performed by using the new initial key as that described above, or performed by further adding the dynamic encryption key KE for encryption. Compared to the aforementioned embodiments, when the initial key K0 is set uniformly before the product leaves the factory, the key used for encrypting the base number X in this modified embodiment is not the fixed K0 described above, but is the new initial key NK0 that may be changed according to user's setting, and an advantage thereof is that variability of the encryption key is increased, and it is more difficult to be decoded, and is suitable for controlling the quantity of the unlocking controllers.

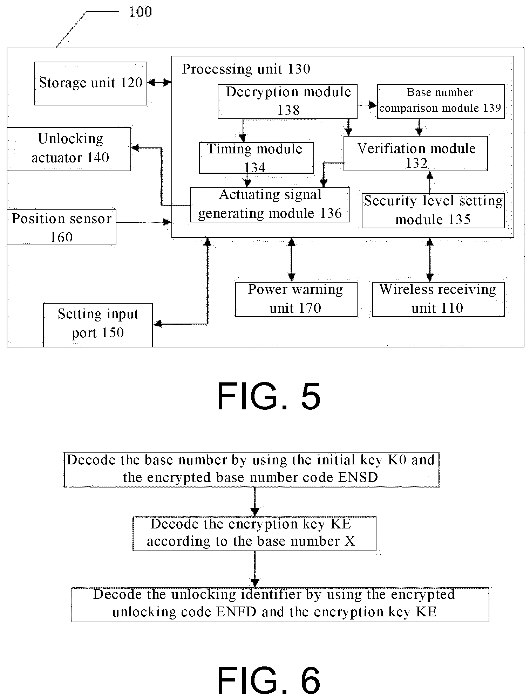

Hereinafter, the aspect of the electronic lock 100 is further described. As shown in FIG. 5, the processing unit 130 of the electronic lock 100 of the embodiment further includes a decryption module 138, where the decryption module 138 includes a first decryption sub-module and a second decryption sub-modules (not shown), and a decision sub-module (not shown) set corresponding to the operations of the unlocking controller 200. In addition to storing the set unlocking identifiers for comparison, the storage unit 120 is also configured to store the same keystore as the keystore stored in the unlocking controller 200, namely, the keystore contains multiple password keys, and each key may be a 64-bit key, and the quantity of the keys may be arbitrarily set up to 100. However, in a modified embodiment, the keystore in the storage unit 120 does not store the same keys as the keystore in the unlocking controller 200, but only stores the initial key K0 with same protocol as that in the unlocking controller 200.

Hereinafter, a decoding process of the electronic lock 100 is described with reference of FIG. 6. When the electronic lock 100 receives the transmitted codes ENSD and ENFD, the verification module 132 first determines types of the codes to decide how many codes to be decoded. Then, since the electronic lock 100 also stores a keystore with, for example, 100 sets of keys, and the first key is also set as the initial key K0 in accordance with the setting of the unlocking controller, when the electronic lock 100 receives and the transmitted RF signal, the electronic lock 100 first uses the initial key K0 to decrypt the received encrypted base number code ENSD by using the first decryption sub-module in the decryption module 138, and deduces the base number X generated by the base number generating module 234 of the unlocking controller 200. Then, the decision sub-module (not shown) having a same design logic as the unlocking controller 200 in the decryption module 138 is used to decide the second key in the keystore according to the decrypted base number X, which the second key at this moment is the same as the dynamic encryption key KE in the unlocking controller 200, so that the obtained second key is also referred to as the dynamic encryption key KE hereinafter.

Further, as described above, when the storage unit 120 stores the same keystore as the unlock controller 200, the selected dynamic encryption key KE is found from the keystore. However, in a modified embodiment, when the keystore in the unlocking controller 200 does not store many keys, but the keys are generated randomly based on the base number X, correspondingly, the storage unit 120 of the electronic lock 100 does not need to store so many or the same keys, and it only needs to use the decryption module 138 to directly decrypt the dynamic encryption key KE according to the decoded base number X in collaboration with a logical setting in the unlock controller 200. The decryption sub-module, the decision sub-module, et cetera. , may also be hardware structures or software program expressions.

Further, in another modified embodiment, when the unlocking controller 200 is designed to have at least one intermediate key for encryption, the decryption module 138 of the electronic lock 100 is also designed to decrypt at least one of the intermediate key. Namely, when at least one intermediate key is set between the initial key K0 and the encryption key KE, a second key decrypted by using the initial key K0 is the intermediate key, at this moment, the intermediate key and the base number X are used to decrypt a third key to serve as the dynamic encryption key KE. When there are two intermediate keys, decryption thereof may be deduced by analogy.

Then, the received encrypted unlocking code ENFD is decrypted by using the second decryption sub-module (not shown) and the above decrypted dynamic encryption key KE, to obtain the transmitted unlocking code UC to complete the decryption operation. Then, the verification module 132 may compare the decrypted unlocking code UC with the unlocking identifier stored in the storage unit 120 to determine whether to perform the unlocking operation.

Further, in a modified embodiment, the processing unit 130 further includes a base number comparison module 139, and each time the base number X is decrypted, the base number X is stored, and the base number X is compared with a previously stored based number, and decryption may be achieved only when a difference thereof is within a range of a specific value, or the base numbers are different. Particularly, when the unlocking controller 200 takes a counting number as the base number X, the electronic lock 100 also stores the decrypted new base number, and the unlocking is achieved only when the new base number and the old base number are matched or a difference thereof is within a specific range. In this way, even if the wireless signal is illicitly recorded, it cannot be reused, and the electronic lock 100 will not be unlocked because of the illicitly recording. Especially, when the counting number is as high as several hundreds of thousands, it will take many years before repeating, and this shows the advantage of using the counting number as the base number.

Further, in the present embodiment, since even if the decryption module 138 of the electronic lock 100 decrypts the counting number serving as the base number, it still needs to decrypt the dynamic encryption key KE by using the base number X, and then decrypt the encrypted unlocking code ENFD by using the dynamic encryption key KE in order to decrypt the unlocking code UC, the unlocking code UC will be more difficult to be decoded by thieves.

In still another modified embodiment, when the electronic lock 100 is controlled by a plurality of the unlocking controllers 200, and an unlocking counting number is taken as the base number X, the storage unit 120 stores a counting library that records a plurality of counting numbers individually corresponding to the plurality of unlocking controllers. In the embodiment, when the electronic lock 100 receives the encrypted base number code ENSD and the encrypted unlocking code ENFD, the electronic lock 100 may receive the encrypted or unencrypted controller identifier ENTX or TXID at the same time. When the electronic lock 100 identifies which unlocking controller 200 sends the signal, the electronic lock 100 obtains the previous unlocking counting number corresponding to the controller identifier TXID to serve as a basis for determining whether the counting number meets an unlocking condition, and store the newly received counting number in the counting library at a position corresponding to a serial number of the unlocking controller. In the embodiment, up to 100 sets of counting numbers may be stored according to a memory size.

Further, in an advanced embodiment of the modified embodiment, when the electronic lock 100 obtains TXID, in addition to finding the corresponding counting number accordingly, the electronic lock 100 also finds the new initial key NK0 in the modified embodiment of the unlocking controller 200 described above, and then uses the new initial key NK0 to decrypt the received encrypted base number code ENSD to obtain the base number X. In this embodiment, the electronic lock 100 stores the same keystore as the keystore in the unlocking controller 200, and each key in the keystore has a corresponding unlocking controller identifier TXID. When the electronic lock 100 receives the encrypted controller identifier ENTX, the electronic lock 100 first uses the shared initial key K0 to decode the selected serial number, such as TX2 of the unlocking controller 200, and then uses the key, such as K2 corresponding to the serial number TX2 to serve as the new initial key NK0 to decrypt the base number X. Other subsequent decryption mechanisms after the base number X is decrypted are the same as those described in the previous embodiment, and are not repeated.

Further, in the second embodiment, the time when the timing module starts timing may be started as soon as the decryption module 138 receives the unlocking signal.

Further, in a preferred embodiment, the processing unit 130 of the electronic lock 100 further has a defense mechanism (not shown). Namely, when signals with the same base number X are received consecutively more than a certain number of times within a specific time length, or the base number X representing a certain serial number is continuously wrong for more than a certain number of times, such as 30 times or more, the electronic lock 100 sleeps for 1 hour to prevent thieves from unlocking the lock illegally through frequency sweeping. Moreover, it may be further set as that once a legal unlock controller 200 is used to perform unlocking, the unlock controller 200 must first send an identity confirmation signal to perform a wake-up operation to abort the sleeping, so as to avoid being limited by the 1 hour sleeping for unlocking. Certainly, the identity confirmation signal at this time is also preferably encrypted by using a specific key coordinated by both electronic lock 100 and the unlock controller 200.

Further, before the unlocking controller 200 sends the aforementioned encrypted base number code ENSD and encrypted unlocking code ENFD, it may also perform checking first like the aforementioned decoding method of the electronic lock 100 to confirm that the two codes ENSD and ENFD are correctly correspond to the set unlocking code.

Further, in the above embodiments, the encryption method is described in the case of setting two layers of keys. In a modified embodiment, the encryption method may also be implemented by using an one-layer key without using two layers of keys as described above. Namely, only the key is stored in the keystore, and the base number and the unlocking identifier IP may be encrypted by using the key. Particularly, when the unlocking controller identifier TXID itself is in a key form, and is set by the user or set randomly, and a pairing status thereof with the electronic lock is simple, the identifier TXID may be directly used to perform encryption or decryption on the base number X and the unlocking identifier IP separately or together, thereby forming a simple encryption method.

According to the above encryption method, when a set of unlocking code UC is sent, there may be multiple combinations. For example, only the fixed code or rolling code of the unlocking codes UC may be sent as that described in the first embodiment; or the fixed code of a part of the unlocking codes UC may be sent together with the encrypted base number code ENSD and the encrypted unlocking code ENFD; or only the encrypted base number code ENSD and the encrypted unlocking code ENFD are sent; or an encrypted unlocking code obtained by encrypting the base number and the unlocking code together is sent. Therefore, preferably, there is a code type identifier at the beginning of each code, so that the receiving unit of the electronic lock may identify the quantity of codes the received signal contains, and then carry out different decoding steps. When the fixed code of a part of the unlocking codes UC are sent together with the encrypted base number code ENSD and the encrypted unlocking code ENFD at the same time, one advantage is that after the unlocking code UC is decrypted from the encrypted unlocking code ENFD, it may be compared with the fixed code transmitted at the same time, so as to further prevent hackers from adding noise into the encrypted signal to cause an error of successful decoding.

Further, in the aforementioned embodiment, an advantage of using the dynamic base number X in the encrypted unlocking code is that regardless of whether the base number X is a counting number or a random number, the encrypted unlocking code sent each time is different, so as to prevent the unlocking code from being illicitly recorded and used for repeated unlocking. Namely, the counting number may be changed along with the number of times that the signal is sent, and in addition to increasing the difficulty in decoding, the counting number may also be sent to be utilized in a decrypting process for comparison, so as to prevent the unlocking signal from being recorded and used for repeated unlocking in a normative way of positively limiting a difference. If the base number is a random number, it may also increase the difficulty in decoding, and a negative list normative way of prohibiting the unlocking by repeated base number may be added to the decrypting process to prevent the unlocking signal from being illicitly recorded and used for repeated unlocking. In the example of using the base number to generate the dynamic encryption key KE, encrypt the unlocking code UC by using the dynamic encryption key KE, and send the encrypted unlocking code ENFD, it will be more difficult for a thief to decode.

In summary, in the invention, two sets of user-built identifiers are used to largely expand a product function, and the invention provides a hidden multi-function remote control electronic lock adapted for the user to build an unlocking password by his own, and provides a remote control electronic lock system adapted for the user to modify a security level by his own, and a method of transmitting the unlocking code through secure encryption, by which the entire electronic lock is more secure to prevent the unlocking code from being stolen, and an electronic lock system that may achieve the above-mentioned various objectives is obtained.

It will be apparent to those skilled in the art that various modifications and variations can be made to the disclosed embodiments without departing from the scope or spirit of the invention. In view of the foregoing, it is intended that the invention covers modifications and variations provided they fall within the scope of the following claims and their equivalents.

## Claims

1. An electronic lock system, comprising an electronic lock, and the electronic lock, **characterized in that**, comprising:
a setting input port, configured to allow a user to variably set at least two sets of unlocking identifiers, wherein at least one of at least two sets of the unlocking identifiers is a random number automatically generated by a computer used by the user;
a storage unit, capable of storing at least two sets of the unlocking identifiers;
a wireless receiving unit, configured to receive an unlocking signal wirelessly;
a processing unit, connecting the wireless receiving unit and the storage unit, and comprising
an verification module, configured to identify the unlocking signal, and capable of verifying whether the unlocking signal matches with at least two sets of the unlocking identifiers; and
an actuating signal generating module, configured to send an actuating signal in case that the unlocking signal matches with at least two sets of the unlocking identifiers;
an unlocking actuator, configured to perform unlocking when receiving the actuating signal.

2. The electronic lock system as claimed in claim 1, **characterized in that**, further comprising a timing module, configured to start timing after receiving the unlocking signal, and the actuating signal generating module sending the actuating signal only when at least two sets of the unlocking identifiers are verified within a specific time length.

3. The electronic lock system as claimed in claim 2, **characterized in that**, the processing unit further comprises a security level setting module, configured to change a length of the specific time length or a quantity of sets of the unlocking identifiers required to be verified by the verification module.

4. The electronic lock system as claimed in claim 1, **characterized in that**, at least one set of the unlocking identifier is an unlocking controller identifier, and the unlocking controller identifier is automatically generated by the computer used by the user.

5. The electronic lock system as claimed in claim 1, **characterized in that**, one of at least two sets of the unlocking identifiers is a power replacement confirmation code, and the electronic lock further comprises a power warning unit, configured to enter a sleep mode to stop receiving the unlocking signal when a specific value of power is left, and after entering the sleep mode, the sleeping is aborted only when the power replacement confirmation code is received.

6. The electronic lock system as claimed in claim 1, **characterized in that**, the storage unit stores a keystore, and the keystore comprises at least one key; the unlocking signal received by the wireless receiving unit comprises an encrypted unlocking code obtained by encrypting a set of unlocking codes by using at least one of a base number and at least one of the key; and the processing unit further comprises a decryption module configured to decrypt at least one of the base number and the set of unlocking codes from the received encrypted unlocking code by using at least one of the key, for comparing with one of at least two sets of the unlocking identifiers.

7. The electronic lock system as claimed in claim 6, **characterized in that**, the decryption module further uses at least one of the key and the base number to generate a dynamic encryption key by an encryption logic, and decrypts one set of the unlocking codes by using the dynamic encryption key.

8. The electronic lock system as claimed in claim 6, **characterized in that**, the base number is a counting number, and the processing unit further comprises a base number comparison module, configured to compare the base number with a previously decrypted base number after the base number is decrypted, and unlocking is achieved only when a difference thereof is within a range of a specific value.

9. The electronic lock system as claimed in claim 8, **characterized in that**, the unlocking signal received by the wireless receiving unit comprises an unlocking controller identifier corresponding to an individual unlocking controller, and the electronic lock stores a counting library recording a plurality of counting numbers individually corresponding to a plurality of unlocking controllers, and the base number comparison module compares the decrypted base number with the existing counting number corresponding to the received controller identifier.

10. The electronic lock system as claimed in claim 6 or claim 9, **characterized in that**, the keystore stores a plurality of keys corresponding to different unlocking controller identifiers, and an encrypted unlocking controller identifier is first decrypted by using an initial key in the keystore to obtain the unlocking controller identifier, and a key corresponding to the unlocking controller identifier is taken as a new initial key to perform subsequent decryption on the encrypted unlocking code.

11. The electronic lock system as claimed in claim 6, **characterized in that**, the processing unit further comprises a defense mechanism, configured to enable the electronic lock to enter a sleep state when the unlocking signals having the same base number are continuously received for more than a certain number of times or the base number is continuously wrong for more than a certain number of times.

12. The electronic lock system as claimed in claim 1, **characterized in that**, further comprises at least one unlocking controller, having:
a storage unit, storing at least one of at least two sets of the unlocking identifiers; and
a transmission control unit, configured to transmit an unlocking signal containing at least one of at least two sets of the unlocking identifiers to the electronic lock within the specific time length.

13. The electronic lock system as claimed in claim 12, **characterized in that**, the unlocking controller further comprises a power replacement confirmation module, configured to make the unlocking controller to send a power replacement confirmation code when being triggered.

14. The electronic lock system as claimed in claim 12, **characterized in that**, the storage unit of the unlocking controller stores a keystore, the keystore contains at least one key; the control unit further comprises a base number generating module and an encryption module; the base number generating module is configured to generate a base number; the encryption module is configured to generate a set of encrypted unlocking codes, obtained by encrypting a set of unlocking codes according to at least one of the base number and at least one of the key in the keystore, for a wireless transmitting unit to transmit the unlocking signal containing the set of encrypted unlocking codes.

15. The electronic lock system as claimed in claim 14, **characterized in that**, the encryption module further generates at least one dynamic encryption key according to at least one of the key in the keystore and the base number; and uses the dynamic encryption key to encrypt the set of unlocking codes to generate the encrypted unlocking code.

16. The electronic lock system as claimed in claim 14, **characterized in that**, the unlocking controller is set with an unlocking controller identifier and is matched with one of the key in the keystore, wherein the encryption module encrypts the unlocking controller identifier by using an initial key different from the matched key to generate an encrypted controller identifier for sending, and uses the key matched with the unlocking controller identifier as the key used for encrypting the unlocking code.

17. The electronic lock system as claimed in any one of claims 12-16, **characterized in that**, the unlocking controller comprises a major unlocking controller and at least one sub-unlocking controller, a storage unit of the major unlocking controller stores a plurality of unlocking controller identifiers; and the sub-unlocking controller stores at least one of the plurality of unlocking controller identifiers, and at least one of the unlocking controller identifier is no longer be assigned to other sub-unlocking controllers for usage.

18. The electronic lock system as claimed in claim 12, **characterized in that**, the unlocking controller further comprises a control time limiting module for limiting that the unlocking controller is only able to be used within a specified time.

19. A password encryption method, wherein the password is stored in a storage unit, and the storage unit further stores a keystore, and the keystore contains at least one key; the password encryption method comprising:
obtaining a dynamic base number in response to each encryption request;
taking out at least one of the key to encrypt the base number to generate an encrypted base number for transmission; and
generating a dynamic key according to at least one of at least one of the key and the base number, and encrypting the password by using the dynamic key to generate an encrypted password for transmission.

20. The password encryption method as claimed in claim 19, wherein one of the keys in the keystore is set as an initial key, and the password encryption method further comprises:
using the initial key to encrypt a serial number selected by the user corresponding to other keys in the keystore to generate an encrypted serial number for transmission;
wherein the step of encrypting the base number is to use the key corresponding to the serial number for encryption; and
the dynamic key is generated by using one of the corresponding key and the base number.

21. A password decryption method, applied to a device, wherein the device has a storage unit for storing a keystore, and the keystore comprises at least one key; the password decryption method comprising:
receiving an encrypted dynamic base number code formed by encrypting a dynamic base number and an encrypted password formed by encrypting a password;
taking out at least one of the key to decrypt the encrypted dynamic base number code to obtain the base number;
using at least one of the base number and at least one of the key to decrypt the dynamic key; and
using the dynamic key to decrypt the encrypted password to obtain the password.

22. The password decryption method as claimed in claim 21, wherein one of the keys in the keystore is set as an initial key, and the password decryption method further comprises:
receiving an encrypted serial number formed by encrypting a serial number; and
taking out the initial key to decrypt the serial number;
wherein the step of decrypting the encrypted base number is to use the key corresponding to the serial number in the keystore for decryption; and
the dynamic key is generated by using at least one of the corresponding key and the base number.
